# EUROPÄISCHE PATENTANMELDUNG

(11) **EP 4 509 283 A1**
(43) Veröffentlichungstag der Anmeldung: **19.02.2025**
(21) Anmeldenummer: 23192021.6
(22) Anmeldetag: 17.08.2023
(51) Int. Cl.: B27B 17/02

(54) **MOTORSÄGE UND VERFAHREN ZUR HERSTELLUNG EINES EINSCHNITTS IN EINEM WERKSTÜCK MIT EINER MOTORSÄGE**

(71) Anmelder: Andreas Stihl AG & Co. KG, 71336 Waiblingen (DE)
(72) Erfinder: Honold, Clemens, 71384 Weinstadt (DE); Mandel, Roland, 70329 Stuttgart (DE); Posner, Benedikt, 78549 Spaichingen (DE)
(74) Vertreter: Reinhardt, Annette

(57) **Zusammenfassung**

Eine Motorsäge (1) umfasst ein Gehäuse (2), eine Führungsschiene (10), an der eine Sägekette (11) geführt ist, und einen Antriebsmotor (9) zum Antrieb der Sägekette (11). Die Motorsäge (1) weist eine Querrichtung (y) auf, die senkrecht zu einer Ebene (37) der Führungsschiene (10) verläuft. Die Motorsäge (1) weist eine erste Längsseite (13) und eine gegenüberliegende zweite Längsseite (14) auf. Die Sägekette (11) spannt beim Umlaufen der Führungsschiene (10) einen Sägekettenraum (35) auf, der bei Blickrichtung in Querrichtung (y) der Motorsäge (1) von einer gedachten Umfangslinie (36) begrenzt ist. Die Motorsäge (1) weist an ihrer zweiten Längsseite (14) mindestens eine Markierung (21, 22) auf, die derart am Gehäuse (2) positioniert ist, dass die Umfangslinie (36) an der breitesten Stelle der Führungsschiene (10) bei Blickrichtung in Querrichtung (y) auf die zweite Längsseite (14) zu einer Verlängerung (25) der Markierung (21, 22) nicht mehr als 2 cm beabstandet ist. Alternativ weist die Motorsäge (1) an ihrer zweiten Längsseite (14) eine erste Markierung (21) und eine zweite Markierung (22) auf, wobei die beiden Markierungen (21, 22) derart am Gehäuse (2) positioniert sind, dass die beiden Markierungen (21, 22) an jeder Stelle einen Abstand (e) von mindestens 40 mm zueinander aufweisen.

## Beschreibung

Die Erfindung betrifft eine Motorsäge der im Oberbegriff des Anspruchs 1 angegebenen Gattung und ein Verfahren zur Herstellung eines Einschnitts in einem Werkstück mit einer Motorsäge.

Beim Arbeiten mit Motorsägen stellt insbesondere das Fällen von Bäumen den Bediener vor Herausforderungen. Die Ausrichtung und Tiefe der mit der Motorsäge durchzuführenden Schnitte hat erheblichen Einfluss darauf, ob der Baum in kontrollierter Weise in die gewünschte Richtung fallen kann.

Aus der DE 10 2010 008 102 A1 ist eine Anzeigeeinrichtung bekannt, die beim Ausführen eines Sohlenschnitts auf dem Boden eine Markierung erzeugt, die die Fällrichtung des Baums anzeigt.

Der Erfindung liegt die Aufgabe zugrunde, eine Motorsäge der gattungsgemäßen Art zu schaffen, die das Arbeiten mit der Motorsäge vereinfacht, und ein Verfahren zur Herstellung eines Einschnitts in einem Werkstück mit einer Motorsäge anzugeben.

Diese Aufgabe wird durch eine Motorsäge mit den Merkmalen des Anspruchs 1 gelöst. Hinsichtlich des Verfahrens wird die Aufgabe durch ein Verfahren mit den Merkmalen des Anspruchs 21 gelöst.

Die Motorsäge weist eine erste Längsseite und eine gegenüberliegende zweite Längsseite auf. Es ist vorgesehen, dass die Motorsäge an ihrer zweiten Längsseite mindestens eine Markierung aufweist. Die mindestens eine Markierung ist derart am Gehäuse positioniert, dass die Umfangslinie bei Blickrichtung in Querrichtung auf die zweite Längsseite zu einer gedachten Geraden, die entlang der Markierung verläuft, einen minimalen Abstand von nicht mehr als 2 cm oder keinen Abstand aufweist.

Die Markierung zeigt dem Bediener die Lage der Sägekette an der Oberseite und/oder an der Unterseite der Führungsschiene an, auch wenn die Sägekette vom Bediener nicht sichtbar ist, sich also beispielsweise im Schnitt befindet. Die Markierung zeigt dem Bediener insbesondere die Lage der Zahnspitze der Sägekette an. Die Markierung zeigt während der Ausführung eines Schnitts die Schnitttiefe an. Beim Fällen eines Baumstamms muss der Bediener sowohl den Fallkerb als auch den Fällschnitt in der richtigen Tiefe ausführen, so dass die Bruchleiste die gewünschte Breite aufweist. Aufgrund der Markierung kann der Bediener auf einfache Weise Fallkerb und/oder Fällschnitt in der gewünschten Tiefe herstellen. Auch das Herstellen von Fensterausschnitten bei der Erstellung von Holzhäusern ist durch die mindestens eine Markierung vereinfacht.

Insbesondere ist die mindestens eine Markierung derart am Gehäuse positioniert, dass die Umfangslinie bei Blickrichtung in Querrichtung auf die zweite Längsseite zu der gedachten Geraden den minimalen Abstand oder keinen Abstand zu einem Bereich der Umfangslinie aufweist, an dem die Sägekette sich im Sägekettenraum in Richtung auf das Gehäuse bewegt.

Werden auf dem Boden liegende Baumstämme im Wald geschnitten, so zeigt diese Markierung die Lage der Sägekette gegenüber dem Waldboden an. Dadurch kann vermieden werden, dass ein Schnitt bis in den Waldboden ausgeführt wird, was zu einem schnellen Abstumpfen der Sägekette führen würde. Dadurch wird das Arbeiten mit der Motorsäge für den Bediener erleichtert. Der Bediener peilt über die mindestens eine Markierung die Lage der Sägekette im Schnitt.

Insbesondere umfasst die mindestens eine Markierung eine erste Markierung und eine zweite Markierung. Die beiden Markierungen sind insbesondere derart am Gehäuse positioniert, dass die Umfangslinie bei Blickrichtung in Querrichtung auf die zweite Längsseite zu einer gedachten ersten Geraden, die entlang der ersten Markierung verläuft, einen ersten minimalen Abstand von nicht mehr als 2 cm oder keinen Abstand aufweist und zu einer gedachten zweiten Geraden, die entlang der zweiten Markierung verläuft, einen zweiten minimalen Abstand von nicht mehr als 2 cm oder keinen Abstand aufweist. Insbesondere kann der Bediener mittels der ersten Markierung und der zweiten Markierung die Lage der Sägekette im Schnitt peilen.

Der Abstand der gedachten ersten Geraden zu der Umfangslinie bei Blickrichtung in Querrichtung auf die zweite Längsseite beträgt insbesondere an der breitesten Stelle der Führungsschiene nicht mehr als 2 cm, insbesondere nicht mehr als 1 cm, insbesondere nicht mehr als 0,5 cm, wobei der Abstand auch 0 cm betragen kann. Der Abstand der gedachten zweiten Geraden zu der Umfangslinie bei Blickrichtung in Querrichtung auf die zweite Längsseite beträgt insbesondere an der breitesten Stelle der Führungsschiene nicht mehr als 2 cm, insbesondere nicht mehr als 1 cm, insbesondere nicht mehr als 0,5 cm, wobei der Abstand auch 0 cm betragen kann.

Der Abstand der gedachten ersten Geraden zu der Umfangslinie und der Abstand der gedachten zweiten Geraden zu der Umfangslinie sind insbesondere an gegenüberliegenden Seiten der Führungsschiene gemessen.

Der minimale Abstand zwischen den gedachten Geraden und der Umfangslinie an der jeweils zugeordneten Seite der Führungsschiene ist insbesondere möglichst klein, besonders bevorzugt null.

Insbesondere sind eine erste Markierung und eine zweite Markierung an einer Längsseite der Motorsäge vorgesehen. Die Markierungen sind am Gehäuse dabei derart positioniert, dass die gedachten Geraden, die entlang der Markierungen verlaufen, jeweils nahe einer Umfangslinie des Sägekettenraums verlaufen.

Bei Blickrichtung in Querrichtung auf die zweite Längsseite weist die Umfangslinie zu einer gedachten ersten Geraden einen ersten minimalen Abstand von nicht mehr als 2 cm, insbesondere nicht mehr als 1 cm, insbesondere nicht mehr als 0,5 cm, insbesondere keinen Abstand auf. Bei Blickrichtung in Querrichtung auf die zweite Längsseite weist die Umfangslinie zu einer gedachten zweiten Geraden einen zweiten minimalen Abstand von nicht mehr als 2 cm, insbesondere nicht mehr als 1 cm, insbesondere nicht mehr als 0,5 cm, insbesondere keinen Abstand auf. Der erste und/oder der zweite minimale Abstand können in besonders bevorzugter Ausführung 0 cm betragen.

Die mindestens eine Markierung ist insbesondere länglich ausgebildet, beispielsweise als Linie. Bei Blickrichtung in Querrichtung verläuft die gedachte Gerade insbesondere in Längsrichtung der Markierung und mittig durch die Markierung. Die Markierung ist insbesondere durch eine gerade Linie gebildet. Sind mehrere Markierungen vorgesehen, ist insbesondere jede Markierung durch eine gerade Linie gebildet. Auch eine andere Gestaltung mindestens einer, insbesondere aller Markierungen, beispielsweise durch unterbrochene Linien, gewellte Linien, aneinandergereihte Dreiecke, Punkte oder andere grafische Gestaltungen, kann vorteilhaft sein. Die mindestens eine Markierung kann dabei farblich und/oder gegenüber der Kontur des Gehäuses abgesetzt sein, um für den Bediener gut sichtbar zu sein. Es kann vorgesehen sein, dass mindestens eine Markierung durch einen abgebildeten Abschnitt einer Sägekette gebildet ist. Die Abbildung kann farblich hervorgehoben und/oder durch eine Erhebung und/oder Vertiefung gebildet sein. Ein Abschnitt einer Sägekette kann auch als Symbol neben einer Markierung abgebildet sein.

Alternativ oder ergänzend ist vorgesehen, dass die Motorsäge an ihrer zweiten Längsseite eine erste Markierung und eine zweite Markierung aufweist, wobei die beiden Markierungen derart am Gehäuse positioniert sind, dass die beiden Markierungen an jeder Stelle einen Abstand von mindestens 40 mm zueinander aufweisen. Die beiden zueinander beabstandeten Markierungen ermöglichen eine Abschätzung der Lage der Führungsschiene auch dann, wenn mindestens eine Markierung zu einer Geraden, die entlang der Markierung verläuft, einen minimalen Abstand von mehr als 2 cm aufweist. Insbesondere weisen beide Markierungen zu einer entlang der jeweils entlang der Markierung verlaufenden Geraden etwa den gleichen Abstand auf und/oder sind gegenüber der Geraden in der gleichen Richtung versetzt. Die Richtung des Versatzes und die Größe des Abstands kann insbesondere eine Blickrichtung des Bedieners in mindestens einer üblichen Anwendung der Motorsäge berücksichtigen.

Insbesondere beträgt der Abstand der Markierungen mindestens 45 mm, insbesondere mindestens 50 mm.

Der Abstand der Markierungen beträgt insbesondere höchstens 150 mm.

Um über die gesamte Länge der Führungsschiene eine gute Abschätzung der Lage des mit der Sägekette erzeugten Schnitts zu erlauben, ist vorgesehen, dass mindestens eine der Markierungen, bevorzugt beide Markierungen, bei Blickrichtung in Querrichtung mit der Längsmittelachse der Führungsschiene einen Winkel von weniger als 5°, insbesondere von weniger als 2°, insbesondere von weniger als 1° einschließt. Die Längsmittelachse verläuft in Längsrichtung der Führungsschiene zwischen den Längsseiten und zwischen den Flachseiten der Führungsschiene. Die Längsmittelachse verläuft in einer Ebene der Führungsschiene. Besonders bevorzugt ist mindestens eine der Markierungen im Rahmen der Fertigungsgenauigkeit parallel zur Längsmittelachse der Führungsschiene ausgerichtet.

Die Blickrichtung in Querrichtung kann auch als Blickrichtung auf die Längsseiten oder als Blickrichtung auf die Seitenflächen eines Arbeitsgeräts, insbesondere auf die Längsseiten oder Seitenflächen einer Motorsäge, bezeichnet werden.

Insbesondere schließen die erste Markierung und die zweite Markierung bei Blickrichtung in Querrichtung einen Winkel von weniger als 5°, insbesondere von weniger als 2°, insbesondere von weniger als 1° ein. Insbesondere verlaufen die erste Markierung und die zweite Markierung bei Blickrichtung in Querrichtung parallel zueinander.

Die Führungsschiene verläuft insbesondere näher an der ersten Längsseite als an der zweiten Längsseite der Motorsäge. Die zweite Längsseite der Motorsäge, die die beiden Markierungen aufweist, ist demnach die der Führungsschiene entfernt liegende Längsseite der Motorsäge. Beim Ausführen von Fällschnitten wird die Motorsäge üblicherweise so gehalten, dass die Führungsschiene nahe am Boden angeordnet werden kann. Die Längsseite, die benachbart zur Führungsschiene liegt, weist dabei nach unten zum Boden. Die Markierungen sind insbesondere an der gegenüberliegenden Längsseite der Motorsäge angeordnet. Die Markierungen sind insbesondere an der Längsseite der Motorsäge angeordnet, die beim Ausführen von Fällschnitten oder beim Ausführen von bodennahen Schnitten nach oben zeigt. Die Markierungen sind insbesondere an der Längsseite der Motorsäge angeordnet, die bei Ausführen von Fällschnitten oder bodennahen Schnitten weiter entfernt vom Boden liegt.

Insbesondere weist die Motorsäge an der zweiten Längsseite ein Gitter mit Öffnungen auf. Die Öffnungen und die zwischen den Öffnungen liegenden Gitterstege des Gitters spannen einen Ansaugbereich auf. Insbesondere ist die Motorsäge von einem Verbrennungsmotor angetrieben, und über den Ansaugbereich wird Arbeitsluft für den Verbrennungsmotor angesaugt. In alternativer Ausführung ist die Motorsäge von einem Elektromotor angetrieben. Besonders insbesondere ist die Motorsäge von einem Akku mit Energie versorgt. Es kann vorgesehen sein, dass über den Ansaugbereich Kühlluft für den Antriebsmotor, nämlich für den Verbrennungsmotor oder für den Elektromotor, angesaugt wird.

Insbesondere verläuft mindestens eine der Markierungen zumindest teilweise in dem Ansaugbereich. Insbesondere ist vorgesehen, dass mindestens eine der Markierungen zumindest teilweise auf einem Gittersteg des Gitters verläuft. Dadurch ist die Markierung optisch für den Bediener besonders gut wahrnehmbar. Gleichzeitig ergibt sich ein ansprechendes Äußeres der Motorsäge. Alternativ kann vorgesehen sein, dass mindestens eine Markierung zumindest teilweise, insbesondere vollständig außerhalb des Ansaugbereichs verläuft. Dies ist insbesondere dann von Vorteil, wenn die Ausrichtung der Gitterstege des Gitters und/oder die Position des Gitters nicht oder nicht ausreichend genau mit der Ausrichtung der Längsmittelachse der Führungsschiene und der Position der Umfangslinie des Sägekettenraums übereinstimmen.

Insbesondere ist mindestens eine Markierung durch eine farblich hervorgehobene Linie gebildet. Eine solche Markierung kann auf einfache Weise aufgebracht werden. Die Linie kann beispielsweise auf dem Gehäuse aufgebracht sein. Insbesondere ist die Markierung zumindest teilweise in einer Farbe ausgeführt, die eine Kontrastfarbe zur umgebenden Farbe des Gehäuses bildet.

In weiterer alternativer Gestaltung kann alternativ oder zusätzlich vorgesehen sein, dass die erste Markierung und/oder die zweite Markierung aus einem anderen Werkstoff hergestellt sind als das Gehäuse. Hierzu kann beispielsweise ein Zweikomponenten-Spritzguss-Verfahren zur Herstellung des Gehäuses vorgesehen.

Alternativ oder zusätzlich ist bevorzugt vorgesehen, dass mindestens eine Markierung zumindest teilweise, insbesondere vollständig durch eine hervorstehende Rippe gebildet ist. Dadurch wird die Erkennbarkeit der Markierung erhöht. Durch die Gestaltung an einer hervorstehenden Rippe ist auch bei Kratzern oder anderen Beschädigungen der Motorsäge die Sichtbarkeit weiter gewährleistet. Alternativ kann die Markierung zumindest teilweise, insbesondere vollständig durch eine Vertiefung gebildet sein. Die Rippe und/oder die Vertiefung sind insbesondere am Gehäuse oder an einem am Gehäuse fixierten Bauteil angeordnet.

Insbesondere können die erste Markierung und/oder die zweite Markierung durch eine zumindest teilweise hervorstehende Rippe gebildet sein. Alternativ können die erste Markierung und/oder die zweite Markierung durch eine zumindest teilweise Vertiefung ausgebildet sein. Die Rippen und/oder die Vertiefungen sind in weiterer alternativer Gestaltung am Gehäuse oder an einem am Gehäuse fixierten Bauteil angeordnet.

Insbesondere ist die Stirnseite der Rippe ergänzend farblich hervorgehoben. Insbesondere ist die Rippe so ausgebildet, dass eine farbliche Hervorhebung von einem Bediener einfach mit einem handelsüblichen Stift ausgebessert oder erneut hergestellt werden kann. Alternativ oder zusätzlich kann vorgesehen sein, dass mindestens eine Längsseite der Rippe farblich hervorgehoben ist. Ist sowohl die Stirnseite der Rippe als auch mindestens eine Längsseite der Rippe farblich hervorgehoben, wird die Sichtbarkeit insbesondere bei schräger Sicht auf die Rippe verbessert, so dass auch bei ungünstigen Lichtverhältnissen die mindestens eine Markierung gut sichtbar ist. Ist die Markierung durch eine Vertiefung des Gehäuses gebildet, kann zusätzlich eine farbliche Hervorhebung vorgesehen sein. Dadurch, dass die farblich hervorgehobene Linie an einer Vertiefung aufgebracht ist, ist eine Beschädigung der Markierung durch Kratzer am Gehäuse oder dergleichen weitgehend verhindert.

Es kann vorgesehen sein, dass mindestens eine Markierung an einem am Gehäuse fixierten, separaten Markierungsteil ausgebildet ist. Durch die Gestaltung der Markierung an einem am Gehäuse fixierten, separaten Markierungsteil ist auch eine Nachrüstung von Markierungen an bestehenden Motorsägen möglich. Insbesondere ist das Markierungsteil lösbar am Gehäuse gehalten. Durch die Ausbildung an dem separaten Markierungsteil kann bei lösbarer Fixierung am Gehäuse ein einfacher Austausch des Markierungsteils bei beschädigter Markierung vorgenommen werden. Das Markierungsteil ist bevorzugt ein Teil, das für die Stabilität des Gehäuses nicht notwendig ist und ausschließlich dazu dient, mittels der Markierung die Schnitttiefe anzuzeigen. Die Stabilität des Gehäuses ist insbesondere die Steifigkeit und/oder die Festigkeit des Gehäuses. Das separate Markierungsteil kann an dem Gehäuse beispielsweise mittels Rastverbindung, magnetischer Fixierung oder anderer Befestigungsarten befestigt werden.

Insbesondere trägt die Motorsäge an der zweiten Längsseite eine weitere Markierung, die zur Hochrichtung der Motorsäge um einen Winkel von weniger als 10° geneigt ist. Diese weitere Markierung gibt beim Ausführen eines Fällschnitts die Fällrichtung an.

Insbesondere trägt die Motorsäge an der zweiten Längsseite eine weitere Markierung, wobei eine gedachte weitere Gerade, die entlang der weiteren Markierung verläuft, bei Blickrichtung in Querrichtung an keiner Stelle der Führungsschiene einen Abstand von mehr als 10 mm zur Längsmittelachse der Führungsschiene aufweist. Diese weitere Markierung verläuft bevorzugt parallel zur Längsmittelachse. Diese weitere Markierung erlaubt eine Abschätzung der Richtung beim Einstechen. Der Winkel, den diese weitere Markierung mit der Längsmittelachse einschließt, beträgt insbesondere weniger als 5°, insbesondere weniger als 2°, insbesondere weniger als 1°.

Für ein Verfahren zur Herstellung eines Einschnitts in einem Werkstück mit einer Motorsäge ist vorgesehen, dass die Sägekette in das Werkstück bewegt wird, bis die gedachte erste Gerade und/oder die gedachte zweite Gerade die gewünschte Lage des Bodens des Einschnitts erreicht.

Ausführungsbeispiele der Erfindung werden im Folgenden anhand der Zeichnung erläutert. Es zeigen:
- Fig. 1 und Fig. 2: perspektivische Darstellungen eines ersten Ausführungsbeispiels einer Motorsäge,
- Fig. 3: eine schematische Darstellung der Herstellung eines Fällschnitts mit der Motorsäge aus den Fig. 1 und 2,
- Fig. 4: eine Draufsicht auf ein weiteres Ausführungsbeispiel einer Motorsäge,
- Fig. 5 und Fig. 6: ausschnittsweise Seitenansichten von Ausführungsbeispielen von Motorsägen,
- Fig. 7: eine perspektivische Darstellung eines weiteren Ausführungsbeispiels einer Motorsäge,
- Fig. 8: eine vergrößerte Darstellung des Ausschnitts VIII aus Fig. 7,
- Fig. 9: eine Darstellung entsprechend Fig. 8 für eine Ausführungsvariante der Motorsäge aus Fig. 7,
- Fig. 10: eine ausschnittsweise perspektivische Darstellung eines weiteren Ausführungsbeispiels einer Motorsäge,
- Fig. 11: eine ausschnittsweise vergrößerte perspektivische Darstellung der Motorsäge aus Fig. 10,
- Fig. 12: eine Explosionsdarstellung des in Fig. 11 dargestellten Bereichs der Motorsäge aus Fig. 10,
- Fig. 13: ein Markierungsteil der Motorsäge aus den Fig. 10 bis 12 in vergrößerter perspektivischer Darstellung.

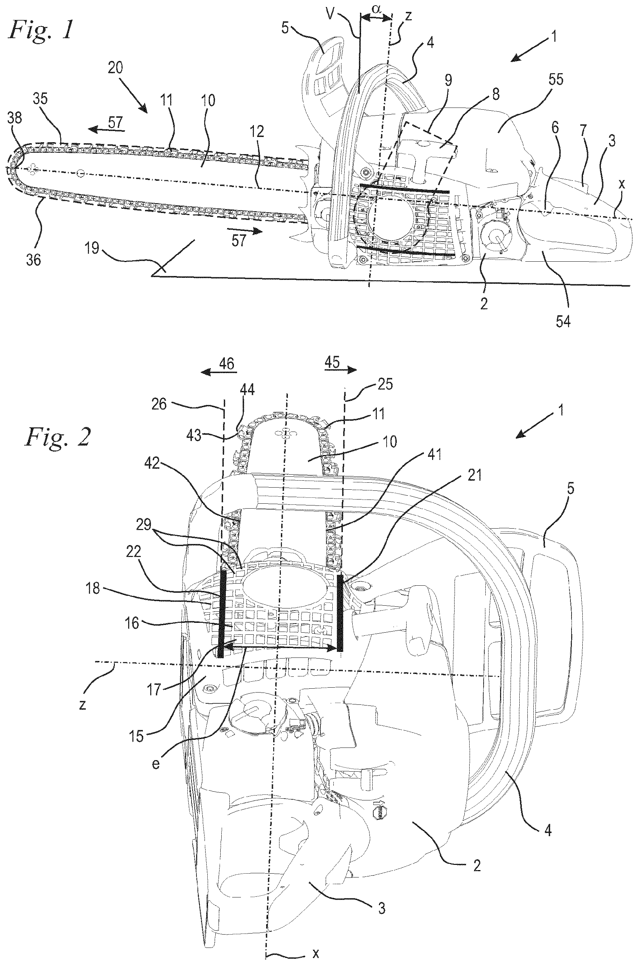

Fig. 1 zeigt eine Motorsäge 1 in perspektivischer Darstellung. Die Motorsäge 1 ist ein handgeführtes, handgetragenes Arbeitsgerät. Im Betrieb wird die Motorsäge 1 vom Bediener getragen und geführt. Die Motorsäge 1 ist dazu vorgesehen, vom Bediener im Betrieb frei im Raum bewegt zu werden, so dass die Motorsäge 1 Schnitte in alle Raumrichtungen ausführen kann.

Die Motorsäge 1 weist ein Gehäuse 2 auf. Das Gehäuse 2 ist durch mehrere Gehäuseteile gebildet, die miteinander fest oder relativbeweglich, beispielsweise über Antivibrationselemente, verbunden sind. Das Gehäuse 2 kann geschlossen ausgebildet sein. Es kann jedoch auch vorgesehen sein, dass das Gehäuse 2 teilweise zur Umgebung offen ist, insbesondere, um Relativbewegungen von Gehäuseteilen im Betrieb zuzulassen. In dem Gehäuse 2 ist ein Antriebsmotor 9 angeordnet. Teile des Gehäuses 2 können dabei gleichzeitig Gehäuseteile des Antriebsmotors 9 bilden. Am Gehäuse 2 sind Handgriffe zum Führen und Tragen der Motorsäge 1 im Betrieb angeordnet. Im Ausführungsbeispiel sind ein hinterer Handgriff 3 und ein Griffrohr 4 am Gehäuse 2 der Motorsäge 1 angeordnet. Am hinteren Handgriff 3 sind Bedienelemente 6 und 7 angeordnet. Im Ausführungsbeispiel ist das Bedienelement 6 ein Gashebel, und das Bedienelement 7 ist eine Gashebelsperre. Im Ausführungsbeispiel ist der Antriebsmotor 9 ein Verbrennungsmotor. Aus dem Gehäuse 2 ragt ein Anwerfgriff 8 zum Starten des Antriebsmotors 9.

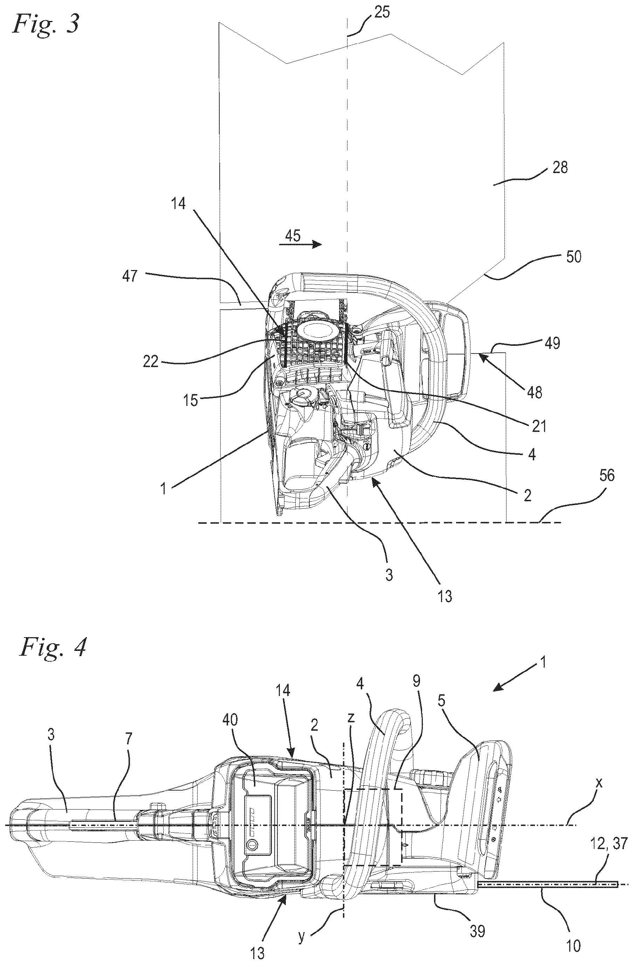

Die Motorsäge 1 weist eine Führungsschiene 10 auf, an der eine Sägekette 11 umlaufend angeordnet ist. Die Sägekette 11 ist im Betrieb vom Antriebsmotor 9 um die Führungsschiene 10 umlaufend angetrieben. Im Betrieb bewegt sich die Sägekette 11 in einem Sägekettenraum 35. Der Sägekettenraum 35 entspricht dabei etwa dem Raum, den die Sägekette 11 im Betrieb beim Schnitt in einem Holzstamm freiräumt. Die Sägekette 11 spannt den Sägekettenraum 35 auf. Der Sägekettenraum 35 ist bei Blickrichtung senkrecht auf eine Ebene 37 (Fig. 4) der Führungsschiene 10 an seinem Außenumfang von einer gedachten Umfangslinie 36 begrenzt, die in Fig. 1 mit gestrichelter Linie eingezeichnet ist.

Die Führungsschiene 10 weist eine Längsmittelachse 12 auf. Die Führungsschiene 10 ist flach ausgebildet und weist an ihrem Umfang üblicherweise eine Nut auf, in die die Sägekette 11 einragt. Insbesondere ragen Treibglieder der Sägekette 11 in die Führungsschiene 10 ein. Die Führungsschiene 10 weist ein freies Ende 38 auf, das vom Gehäuse 2 der Motorsäge 1 entfernt liegt. Die Längsmittelachse 12 erstreckt sich mittig in der Führungsschiene 10 und in Längsrichtung der Führungsschiene 10. Die Führungsschiene 10 weist einander gegenüberliegende Längsseiten, nämlich eine Oberseite 41 und eine Unterseite 42 auf. Die Längsmittelachse 12 erstreckt sich mittig zwischen der Oberseite 41 und der Unterseite 42 der Führungsschiene 10.

Die Sägekette 11 ist im Betrieb in einer Laufrichtung 57 angetrieben. An der Oberseite 41 der Führungsschiene 10 ist die Laufrichtung 57 vom Gehäuse 2 weg gerichtet. An der Unterseite 42 der Führungsschiene 10 ist die Laufrichtung 57 zum Gehäuse 2 hin gerichtet.

An der der Führungsschiene 10 zugewandten Seite des Griffrohrs 4 erstreckt sich ein Handschutz 5. Der Handschutz 5 kann zum Auslösen einer nicht dargestellten Bremse für die Sägekette 11 ausgebildet sein.

Die Motorsäge 1 weist eine Längsrichtung x auf. Die Längsrichtung x verläuft parallel zur Längsmittelachse 12 der Führungsschiene 10. Die Längsrichtung x kann auch als Führungsschienenrichtung bezeichnet werden. In der in Fig. 1 dargestellten Seitenansicht fällt die Längsrichtung x der Motorsäge 1 mit der Längsmittelachse 12 der Führungsschiene 10 zusammen. Die Motorsäge 1 weist eine Hochrichtung z auf, die senkrecht zur Längsrichtung x liegt. Die Motorsäge 1 weist eine Abstellposition 20 auf. In Abstellposition 20 ist die Motorsäge 1 auf einer ebenen, horizontalen Abstellfläche 19 abgestellt. In der perspektivischen Darstellung in Fig. 1 ist die Abstellfläche 19 schematisch dargestellt. In Abstellposition 20 übergreift das Griffrohr 4 das Gehäuse 2 mit Abstand und der hintere Handgriff 3 weist nach oben, so dass die Motorsäge 1 in Abstellposition 20 von einem Bediener gut gegriffen werden kann. Die Hochrichtung z schließt in Abstellposition 20 mit einer Vertikalen V einen Winkel α ein, der bevorzugt weniger als 10° beträgt. Insbesondere umfasst das Gehäuse 2 ein Griffgehäuse 54 und ein Motorgehäuse 55, die über mindestens ein Antivibrationselement miteinander verbunden sind.

Fig. 2 zeigt die Motorsäge 1 in einer anderen Orientierung. Die Darstellung der Motorsäge 1 in Fig. 2 entspricht etwa der Blickrichtung, die ein Bediener beim Ausführen eines Fällschnitts auf die Motorsäge 1 haben kann. Wie Fig. 2 zeigt, weist die Motorsäge 1 zwei längliche Markierungen 21 und 22 auf. Die Markierungen 21 und 22 sind als längliche Striche auf dem Gehäuse 2 vorgesehen und heben sich im Ausführungsbeispiel farblich vom Gehäuse 2 ab. Dadurch sind die Markierungen 21 und 22 für einen Bediener gut erkennbar. Eine gedachte erste Gerade 25 verläuft benachbart zur Oberseite 41 der Führungsschiene 10. Die gedachte erste Gerade 25 verläuft entlang der ersten Markierung 21. Eine gedachte zweite Gerade 26 verläuft benachbart zur Unterseite 42 der Führungsschiene 10. Die gedachte zweite Gerade 26 verläuft entlang der zweiten Markierung 22.

Die Markierungen 21 und 22 weisen einen Abstand e zueinander auf. Der Abstand e ist insbesondere bei Blickrichtung in Querrichtung y der Motorsäge 1 gemessen. Der Abstand e beträgt insbesondere an jeder Stelle der Markierungen 21 und 22 mindestens 40 mm, insbesondere mindestens 45 mm, insbesondere mindestens 50 mm. Der Abstand e beträgt insbesondere weniger als 150 mm.

In vorteilhafter alternativer Gestaltung kann vorgesehen sein, dass die Motorsäge 1 nur eine der Markierungen 21 oder 22, insbesondere nur die zweite Markierung 22, aufweist. Die Markierung 21 oder die Markierung 22 zeigt dem Bediener insbesondere die Schnitttiefe an. Sind zwei Markierungen 21 und 22 vorgesehen, so wird dem Bediener zusätzlich die Lage der Führungsschiene 10 angezeigt. Dies ist beispielsweise bei der Ausführung von Stechschnitten von Vorteil.

Die Sägekette 11 weist Schneidzähne 44 auf, die jeweils eine Spitze 43 aufweisen. Die gedachten Geraden 25 und 26 verlaufen insbesondere zumindest an der breitesten Stelle der Führungsschiene 10 etwa auf der Höhe der Spitzen 43 der Schneidzähne 44 der Sägekette 11. Die gedachten Geraden 25 und 26 geben damit die Lage eines Schnitts an, den die Motorsäge 1 erzeugen kann. Die gedachte erste Gerade 25 gibt dabei die Lage eines Schnitts bei Schnittführungen in Richtung des Pfeils 45 an. Die gedachte zweite Gerade 26 gibt die Lage eines Schnitts bei Schnittführung in Richtung des Pfeils 46 an. Der Pfeil 45 ist dabei von der Unterseite 42 der Führungsschiene 10 zur Oberseite 41 der Führungsschiene 10 gerichtet. Der Pfeil 46 ist dabei von der Oberseite 41 der Führungsschiene 10 zur Unterseite 42 der Führungsschiene 10 gerichtet.

Das Gehäuse 2 kann insbesondere einen Gehäusedeckel 15 aufweisen. Ist der Antriebsmotor 9 ein Verbrennungsmotor, kann der Gehäusedeckel 15 beispielsweise ein Lüfterdeckel sein und den Raum, in dem ein Lüfterrad des Antriebsmotors 9 angeordnet ist, abdecken. Der Gehäusedeckel 15 kann auch ein anderer Deckel des Gehäuses sein. Im Ausführungsbeispiel nach Fig. 2 trägt der Gehäusedeckel 15 die beiden Markierungen 21 und 22. Der Gehäusedeckel 15 weist ein Gitter 16 auf, dessen Gitterstege 29 eine Vielzahl von Öffnungen 17 voneinander trennen. Die Gitterstege 29 des Gitters 16 und die Öffnungen 17 definieren einen Ansaugbereich 18. Im Ausführungsbeispiel verläuft die erste Markierung 21 insbesondere in geringem Abstand zum Ansaugbereich 18 außerhalb des Ansaugbereichs 18. Die zweite Markierung 22 verläuft zumindest teilweise, insbesondere vollständig, durch den Ansaugbereich 18.

Fig. 3 zeigt schematisch die Anordnung der Motorsäge 1 bei der Ausführung eines Fällschnitts 47 in einem Baumstamm 28. An der gegenüberliegenden Seite des Baumstamms 28 wurde bereits ein Fallkerb 48 hergestellt. Der Fallkerb 48 umfasst eine Fallkerbsohle 49 und ein Fallkerbdach 50. Beim Herstellen von Fallkerbsohle 49 und Fallkerbdach 50 wird die Motorsäge 1 in Richtung des Pfeils 46 (Fig. 2) bewegt. Bei der Herstellung des Fällschnitts 47 wird die Motorsäge in Richtung des Pfeils 45 bewegt. Die Lage der Fallkerbsehne, an der sich Fallkerbdach 50 und Fallkerbsohle 49 treffen, wird dem Bediener beim Sägen von Fallkerbdach 50 und Fallkerbsohle 49 durch die zweite Markierung 22 angezeigt. Die Fallkerbsehne ist in Fig. 3 von der Motorsäge 1 verdeckt und daher nicht sichtbar. In Fig. 3 ist die gedachte erste Gerade 25 der ersten Markierung 21 eingezeichnet, die dem Bediener anzeigt, wie tief der Fällschnitt 47 bereits ausgeführt wurde. Dadurch kann ein Bediener auf einfache Weise abschätzen, ob die Bruchleiste bereits die gewünschte Breite hat. Die gewünschte Breite entspricht insbesondere der gewünschten Schnitttiefe.

Wie Fig. 3 zeigt, weist die Motorsäge 1 eine erste Längsseite 13 auf, die bei der in Fig. 3 dargestellten Lage nach unten orientiert ist. Die Motorsäge 1 weist eine gegenüberliegende zweite Längsseite 14 auf, die bei der in Fig. 3 dargestellten Orientierung der Motorsäge 1 nach oben weist. In Fig. 3 ist mit gestrichelter Linie schematisch eine mögliche Lage des Bodens 56 eingezeichnet. Die zweite Längsseite 14 ist die dem Boden 56 entfernt liegende Längsseite der Motorsäge 1.

In Fig. 4 ist die Lage der Längsseiten 13 und 14 anhand eines weiteren Ausführungsbeispiels einer Motorsäge 1 erläutert. Die in Fig. 4 dargestellte Motorsäge 1 ist von einem Antriebsmotor 9 angetrieben, der als Elektromotor ausgebildet ist. Die Markierungen 21 und 22 sind in der Draufsicht in Fig. 4 nicht sichtbar. Zur Versorgung des Antriebsmotors 9 mit Energie dient ein Akku 40. Der Akku 40 ist insbesondere im Gehäuse 2 gehalten. Die in Fig. 4 schematisch dargestellte Führungsschiene 10 ist benachbart zu der ersten Längsseite 13 der Motorsäge 1 angeordnet. Die Motorsäge 1 weist eine Querrichtung y auf. Die Querrichtung y liegt senkrecht zur Längsrichtung x und senkrecht zur Hochrichtung z. Die Lage senkrecht zu einer Richtung bezeichnet die Lage orthogonal zu einer Richtung. Die Querrichtung y verläuft parallel zur Drehachse einer Abtriebswelle des Antriebsmotors 9. Die Querrichtung y liegt parallel zur Antriebsachse eines Antriebsritzels, das die Sägekette 11 antreibt. Dies gilt entsprechend auch für die Ausführung mit Verbrennungsmotor.

Bei Blickrichtung in Querrichtung y verlaufen die gedachten Geraden 25, 26 insbesondere in Längsrichtung der Markierungen 21 und 22 und mittig durch die Markierungen 21 und 22. Die gedachten Geraden 25 und 26 verlaufen insbesondere in Verlängerung der Markierungen 21 und 22, insbesondere in Richtung zur Führungsschiene 10 und zur Sägekette 11.

Die Führungsschiene 10 ist am Gehäuse 2 fixiert. Hierzu ist die Führungsschiene 10 insbesondere von einem Kettenraddeckel 39 geklemmt gehalten. Im Ausführungsbeispiel wird ein Teil der ersten Längsseite 13 durch den Kettenraddeckel 39 gebildet. Die erste Längsseite 13 ist der Bereich der Motorsäge 1, der bei Blickrichtung parallel zur Querrichtung y auf die Seite der Motorsäge 1, die benachbart zur Führungsschiene 10 liegt, sichtbar ist. Die gegenüberliegende Längsseite 14 ist der Bereich der Motorsäge 1, der bei Blickrichtung in Gegenrichtung ebenfalls parallel zur Querrichtung y sichtbar ist. Die Längsseiten 13 und 14 begrenzen die Motorsäge 1 in Querrichtung y. Die Führungsschiene 10 weist die Ebene 37 auf, in der sich die Führungsschiene 10 erstreckt. Die Führungsschiene 10 ist flächig ausgebildet. In der in Fig. 4 dargestellten Draufsicht fällt die Ebene 37 mit der Längsmittelachse 12 der Führungsschiene 10 zusammen.

Beim Ausführen der in Fig. 3 dargestellten Schnitte 47, 49 und 50 weist die erste Längsseite 13 nach unten und die zweite Längsseite 14 nach oben. Die Markierungen 21 und 22 sind an der für den Bediener gut sichtbaren zweiten Längsseite 14 aufgebracht.

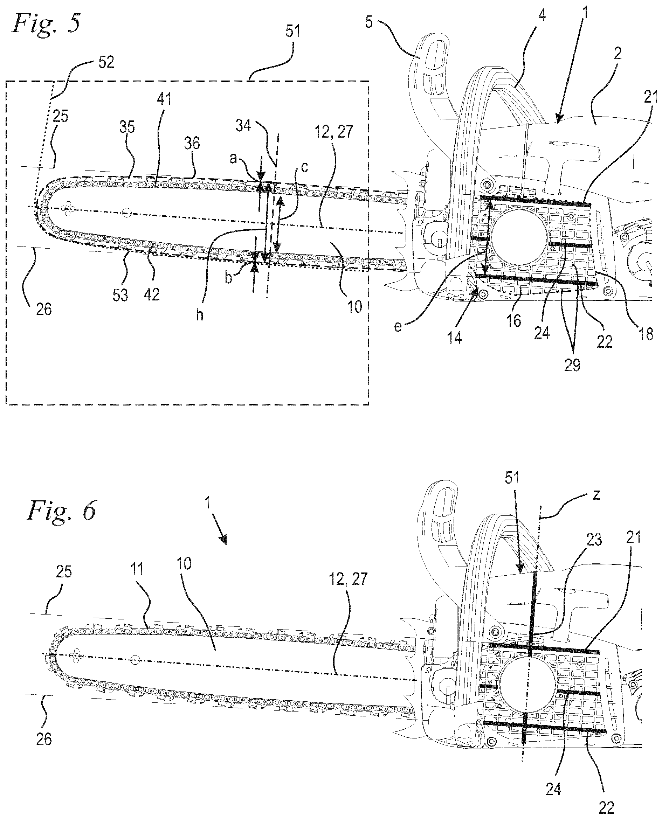

Fig. 5 zeigt ein weiteres Ausführungsbeispiel einer Motorsäge 1. In Fig. 5 ist die Lage der gedachten Geraden 25 und 26 eingezeichnet. Bei Blickrichtung in Querrichtung y ist der Sägekettenraum 35 von einer Umfangslinie 36 begrenzt. Die Führungsschiene 10 weist eine Breite c auf, die senkrecht zur Längsmittelachse 12 und parallel zur Ebene 37 der Führungsschiene 10 gemessen ist. Die Führungsschiene 10 ist an ihrer Oberseite 41 und an ihrer Unterseite 42 insbesondere leicht gewölbt ausgebildet. Die Führungsschiene 10 weist eine Stelle auf, an der die Breite c maximal ist. Diese Stelle ist in Fig. 5 durch eine gestrichelte, senkrecht zur Längsmittelachse 12 verlaufende Linie 34 gekennzeichnet. An der Linie 34 weist die gedachte erste Gerade 25 benachbart zur Oberseite 41 der Führungsschiene 10 zur Umfangslinie 36 einen minimalen Abstand a auf. Der minimale Abstand a ist insbesondere etwa null. Der Abstand a beträgt weniger als 2 cm, insbesondere weniger als 1 cm, ganz insbesondere weniger als 0,5 cm. Der minimale Abstand a ist der kleinste Abstand, den die gedachte erste Gerade 25 an der Oberseite 41 zur Umfangslinie 36 aufweist. In alternativer Ausführung kann vorgesehen sein, dass der minimale Abstand a nicht an der breitesten Stelle der Führungsschiene 10 gemessen ist.

Benachbart zur Unterseite 42 der Führungsschiene 10 weist die gedachte zweite Gerade 26 zur Umfangslinie 36 einen minimale Abstand b auf. Der minimale Abstand b ist insbesondere etwa null. Der minimale Abstand b beträgt insbesondere weniger als 2 cm, insbesondere weniger als 1 cm, ganz insbesondere weniger als 0,5 cm. Der minimale Abstand b ist der kleinste Abstand, den die gedachte zweite Gerade 26 an der Unterseite 42 zur Umfangslinie 36 aufweist. In alternativer Ausführung kann vorgesehen sein, dass der minimale Abstand b nicht an der breitesten Stelle der Führungsschiene 10 gemessen ist.

In Fig. 5 ist der Abstand e der Markierungen 21 und 22 eingezeichnet. Die Markierungen 21 und 22 können in der Blickrichtung in Querrichtung y parallel zueinander verlaufen. Die Markierungen 21 und 22 können in der Blickrichtung in Querrichtung y zueinander geneigt verlaufen. Insbesondere schneiden sich die gedachten Geraden 25 und 26 bei der Blickrichtung in Querrichtung y nicht auf dem Gehäuse 2 der Motorsäge 1.

Der Sägekettenraum 35 weist eine Höhe h auf. Die Höhe h ist die größte Höhe des Sägekettenraums 35 in Richtung senkrecht zur Längsmittelachse 12 der Führungsschiene 10. Der Abstand e entspricht insbesondere mindestens der Höhe h.

Wie Fig. 5 zeigt, trägt das Gehäuse 2 im Ausführungsbeispiel zwischen der ersten Markierung 21 und der zweiten Markierung 22 eine weitere Markierung 24. Eine gedachte weitere Gerade 27, die entlang der weiteren Markierung 24 verläuft, fällt insbesondere mit der Längsmittelachse 12 zusammen. Die weitere Markierung 24 gibt die Lage der Mitte eines mit der Motorsäge 1 ausgeführten Stechschnitts an. Die gedachte weitere Gerade 27 weist zur Längsmittelachse 12 in der in Fig. 5 gezeigten Blickrichtung parallel zur Querrichtung y insbesondere einen Abstand von weniger als 10 mm auf. Insbesondere ist die Verlängerung 27 der Markierung 24 zur Längsmittelachse 12 um einen Winkel von weniger als 5° geneigt. Die gedachte weitere Gerade 27 verläuft insbesondere bei Blickrichtung in Querrichtung y in Verlängerung der weiteren Markierung 24.

Fig. 5 zeigt auch die Gestaltung des Gitters 16 an der zweiten Längsseite 14 der Motorsäge 1 im Einzelnen. Das Gitter 16 ist durch Gitterstege 29 gebildet, die einander kreuzen. In Fig. 5 ist der Ansaugbereich 18 mit gestrichelter Linie umrahmt. Wie Fig. 5 zeigt, verlaufen in diesem Ausführungsbeispiel alle Markierungen 21, 22 und 24 im Ansaugbereich 18. Die Markierungen 21, 22 und 24 verlaufen insbesondere auf Gitterstegen 29 des Gitters 16.

In Fig. 5 ist schematisch die Lage der Führungsschiene 10 und der Sägekette 11 in einem Werkstück 51 dargestellt. Die Führungsschiene 10 und die Sägekette 11 sind in einem von der Sägekette 11 hergestellten Einschnitt 52 angeordnet. Der Einschnitt 52 weist einen Boden 53 auf, der der gewünschten Tiefe des Einschnitts 52 entspricht. Der Einschnitt 52 wurde mit dem an der Unterseite 42 der Führungsschiene 10 angeordneten Bereich der Sägekette 11 hergestellt. In diesem Bereich bewegt sich die Sägekette 11 im Betrieb zum Gehäuse 2 hin, wie Fig. 1 zeigt.

Zur Herstellung des Einschnitts 52 wird die Führungsschiene 10 mit der angetriebenen Sägekette 11 in das Werkstück 51 bewegt, bis die zweite gedachte Gerade 26 die gewünschte Lage des Bodens 53 des Einschnitts 52 erreicht. Danach kann die Führungsschiene 10 mit der Sägekette 11 aus dem Einschnitt 52 geführt werden. Zur Herstellung eines Einschnitts mit dem Bereich der Sägekette 11, der im Betrieb an der Oberseite 41 der Führungsschiene 10 verläuft, wird die Führungsschiene 10 mit der Sägekette 11 in das Werkstück 51 bewegt, bis die erste gedachte Gerade 25 die gewünschte Lage eines Bodens des Einschnitts erreicht. Anschließend kann die Führungsschiene 10 mit der Sägekette 11 aus dem Einschnitt geführt werden.

Fig. 6 zeigt ein Ausführungsbeispiel einer Motorsäge 1, die zusätzlich eine Markierung 23 trägt. Die Markierung 23 entspricht der Fällleiste. Die Markierung 23 verläuft im Ausführungsbeispiel senkrecht zur Längsmittelachse 12 der Führungsschiene. Die Markierung 23 liegt im Ausführungsbeispiel parallel zur Hochrichtung z. Die Markierung 23 weist zur Hochrichtung z bevorzugt einen Winkel von weniger als 5°, insbesondere von weniger als 2°, insbesondere von weniger als 1° auf. Die Markierung 23 gibt beim Ausführen eines Fällschnitts 47 (Fig. 3) die Richtung an, in die der Baumstamm 28 fällt. Im Ausführungsbeispiel nach Fig. 6 erstreckt sich die Markierung 23 auch an einer der Abstellfläche 19 (Fig.1) abgewandten Oberseite 41 der Motorsäge 1.

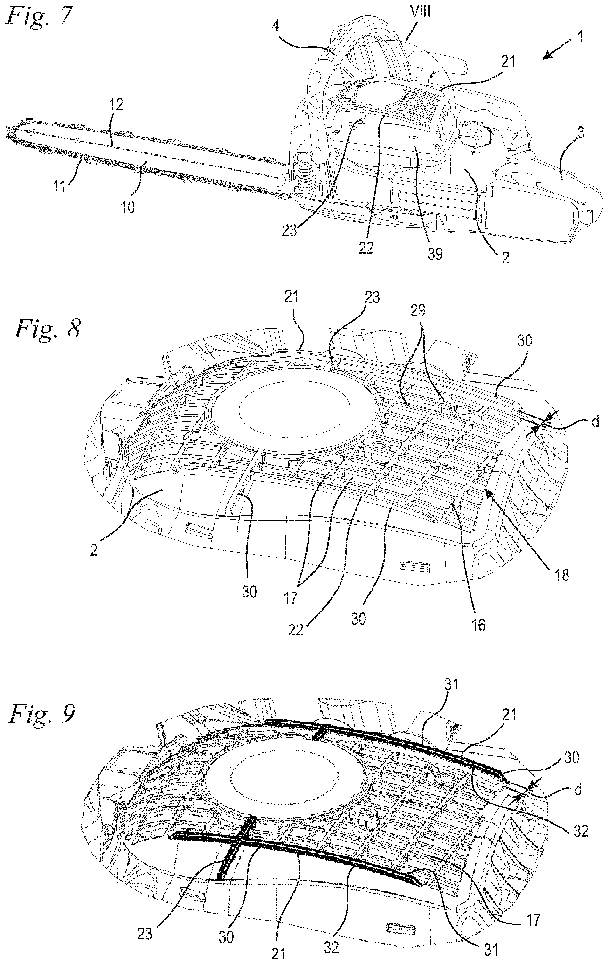

Fig. 7 zeigt ein Ausführungsbeispiel einer Motorsäge 1, die eine erste Markierung 21, eine zweite Markierung 22 sowie eine dritte Markierung 23 trägt. Die dritte Markierung 23 verläuft senkrecht zu den Markierungen 21 und 22.

Wie Fig. 8 zeigt, sind die Markierungen 21, 22 und 23 zumindest teilweise durch Rippen 30 gebildet. Die Markierungen 21, 22 und 23 sind zumindest teilweise als Erhebungen des Gehäuses 2 gestaltet. Insbesondere sind die Rippen 30 zumindest teilweise, insbesondere vollständig durch Erhebungen gebildet. Die erste Markierung 21 ist zumindest teilweise durch eine Rippe 30 gebildet, die in einem Abstand d zum Ansaugbereich 18 verläuft. Die zweite Markierung 22 ist zumindest teilweise durch eine Rippe 30 gebildet, die den Ansaugbereich 18 begrenzt. Die Markierung 23 ist zumindest teilweise durch eine Rippe 30 gebildet, die durch den Ansaugbereich 18 und teilweise außerhalb des Ansaugbereichs 18 verläuft. Die Rippen 30 sind im Ausführungsbeispiel einteilig mit einem Gehäuseteil des Gehäuse 2 ausgebildet.

Fig. 9 zeigt ein Ausführungsbeispiel, bei dem die in Fig. 8 dargestellten Markierungen 21, 22 und 23, die an Rippen 30 ausgebildet sind, zusätzlich farblich hervorgehoben sind. Die farbliche Gestaltung der Markierungen 21, 22 und 23 ist dabei so gewählt, dass ein deutlicher Farbkontrast zwischen den Markierungen 21, 22, 23 und dem umgebenden Bereich des Gehäuses 2 besteht. Die Rippen 30 weisen insbesondere jeweils eine Stirnseite 31 sowie gegenüberliegende Längsseiten 32 auf. Im Ausführungsbeispiel sind sowohl die Stirnseiten 31 als auch die Längsseiten 32 der Rippen 30 farblich hervorgehoben. Dadurch sind die Rippen 30 auch bei ungünstigen Lichtverhältnissen gut sichtbar. In alternativer Gestaltung kann vorgesehen sein, dass nur die Stirnseite 31 und/oder nur eine der Längsseiten 32 farblich markiert sind.

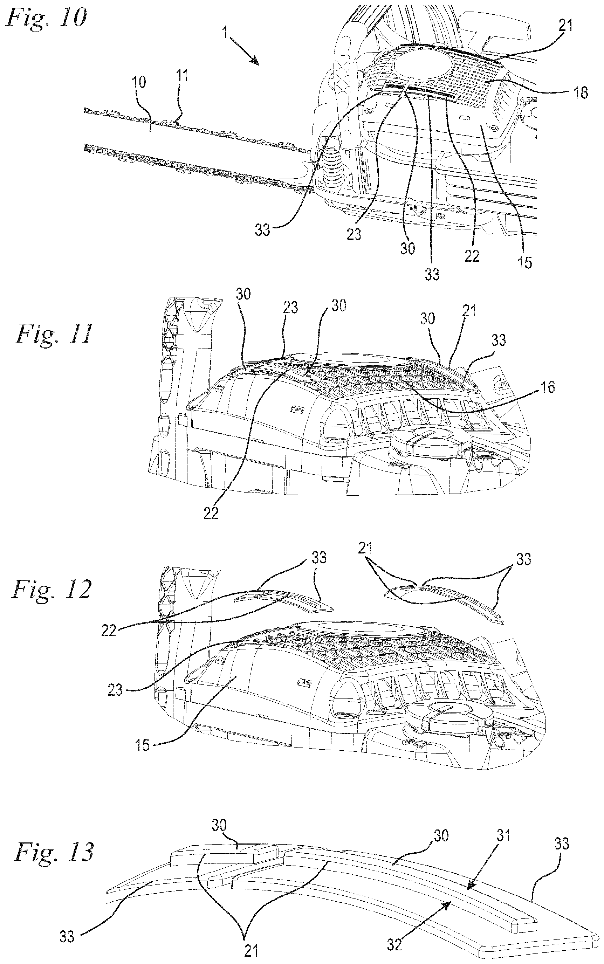

Die Fig. 10 bis 12 zeigen eine Ausführungsvariante, bei der die Markierungen 21 und 22 an Markierungsteilen 33 aufgebracht sind, die separat am Gehäuse 2, im Ausführungsbeispiel am Gehäusedeckel 15, fixiert sind. Die Markierung 23 ist insbesondere zumindest teilweise durch eine hervorstehende Rippe 30 des Gehäusedeckels 15 gebildet. Die Markierung 23 ist insbesondere einteilig mit dem Gehäuse 2 ausgebildet.

Wie die Explosionsdarstellung in Fig. 12 zeigt, sind die Markierungsteile 33 separat vom Gehäusedeckel 15 ausgebildet. Jeweils zwei Markierungsteile 33 bilden die Markierung 21 und zwei weitere Markierungsteile 33 bilden die Markierung 22. Die beiden Markierungsteile 33 einer Markierung 21 bzw. 22 verlaufen jeweils auf gegenüberliegenden Seiten der Markierung 23, wie auch Fig. 10 zeigt. In alternativer Ausführung ist insbesondere vorgesehen, dass mindestens eine Markierung 21, 22, 23, insbesondere jede Markierung 21, 22, 23 durch ein einziges Markierungsteil gebildet ist.

Wie Fig. 13 zeigt, trägt jedes Markierungsteil 33 eine Rippe 30, die die Markierung 21 bzw. 22 bildet. Die Rippen 30 weisen eine nach außen weisende Stirnseite 31 sowie Längsseiten 32 auf. Die Stirnseite 31 und die Längsseiten 32 können farblich hervorgehoben sein.

Die Markierungsteile 33 können am Gehäuse 2 beispielsweise über eine Schnappverbindung, eine Klebverbindung, eine Schraubverbindung, magnetisch oder über andere lösbare oder unlösbare Arten der Befestigung fixiert sein.

Die Motorsäge 1 ist in allen Ausführungsbeispielen im Betrieb vom Bediener von Hand geführt und getragen. Die Motorsäge 1 weist keine Auflagefläche auf, die eine Bezugsebene für den Bediener bilden könnte. Über die Markierungen 21 und 22 kann ein Bediener die Lage der mit der Motorsäge 1 hergestellten Schnittkerbe auf einfache Weise abschätzen. Ist die Markierung an einer hervorstehenden Rippe 30 ausgebildet, ergibt sich ergänzend eine Erhöhung der Stabilität, insbesondere der Steifigkeit und/oder Festigkeit, des Gehäuses 2 im Bereich der Rippe 3.

Gleiche Bezugszeichen kennzeichnen in allen Ausführungsbeispielen einander entsprechende Elemente. Weitere vorteilhafte Ausführungsbeispiele ergeben sich durch beliebige Kombination der dargestellten Gestaltungen und Positionen der Markierungen der Ausführungsbeispiele.

## Patentansprüche

1. Motorsäge mit einem Gehäuse (2), mit einer Führungsschiene (10), an der eine Sägekette (11) geführt ist, mit einem Antriebsmotor (9), der dazu ausgebildet ist, im Betrieb die Sägekette (11) umlaufend anzutreiben, wobei die Motorsäge (1) eine Querrichtung (y) aufweist, die senkrecht zu einer Ebene (37) der Führungsschiene (10) verläuft, wobei das Gehäuse (2) der Motorsäge (1) eine erste Längsseite (13) und eine gegenüberliegende zweite Längsseite (14) aufweist, wobei die Längsseiten (13, 14) das Gehäuse (2) der Motorsäge (1) in Querrichtung (y) begrenzen, wobei die Sägekette (11) beim Umlauf um die Führungsschiene (10) einen Sägekettenraum (35) aufspannt, wobei der Sägekettenraum (35) bei Blickrichtung in Querrichtung (y) der Motorsäge (1) von einer gedachten Umfangslinie (36) begrenzt ist,
**dadurch gekennzeichnet, dass** die Motorsäge (1) an ihrer zweiten Längsseite (14) mindestens eine Markierung (21, 22) aufweist, wobei die mindestens eine Markierung (21, 22) derart am Gehäuse (2) positioniert ist, dass die Umfangslinie (36) bei Blickrichtung in Querrichtung (y) auf die zweite Längsseite (14) zu einer gedachten Gerade (25, 26), die entlang der Markierung (21, 22) verläuft, einen minimalen Abstand (a, b) von nicht mehr als 2 cm oder keinen Abstand aufweist.

2. Motorsäge nach Anspruch 1,
**dadurch gekennzeichnet, dass** die mindestens eine Markierung (22) derart am Gehäuse (2) positioniert ist, dass die Umfangslinie (36) bei Blickrichtung in Querrichtung (y) auf die zweite Längsseite (14) zu einer gedachten Gerade (26), die entlang der Markierung (22) verläuft, den minimalen Abstand (b) oder keinen Abstand zu einem Bereich der Umfangslinie (36) aufweist, an dem die Sägekette (11) sich im Sägekettenraum (35) in Richtung auf das Gehäuse (2) bewegt.

3. Motorsäge nach Anspruch 1 oder 2,
**dadurch gekennzeichnet, dass** die mindestens eine Markierung (21, 22) eine erste Markierung (21) und eine zweite Markierung (22) umfasst, wobei die beiden Markierungen (21, 22) derart am Gehäuse (2) positioniert sind, dass die Umfangslinie (36) bei Blickrichtung in Querrichtung (y) auf die zweite Längsseite (14) zu einer gedachten ersten Geraden (25), die entlang der ersten Markierung (21) verläuft, einen ersten minimalen Abstand (a) von nicht mehr als 2 cm oder keinen Abstand aufweist und zu einer gedachten zweiten Geraden (26), die entlang der zweiten Markierung (22) verläuft, einen zweiten minimalen Abstand (b) von nicht mehr als 2 cm oder keinen Abstand aufweist.

4. Motorsäge nach einem der Ansprüche 1 bis 3 oder nach dem Oberbegriff von Anspruch 1,
**dadurch gekennzeichnet, dass** die Motorsäge (1) an ihrer zweiten Längsseite (14) eine erste Markierung (21) und eine zweite Markierung (22) aufweist, wobei die beiden Markierungen (21, 22) derart am Gehäuse (2) positioniert sind, dass die beiden Markierungen (21, 22) an jeder Stelle einen Abstand (e) von mindestens 40 mm zueinander aufweisen.

5. Motorsäge nach einem der Ansprüche 1 bis 4,
**dadurch gekennzeichnet, dass** die Führungsschiene (10) eine Längsmittelachse (12) aufweist und dass mindestens eine der Markierungen (21, 22) bei Blickrichtung in Querrichtung (y) mit der Längsmittelachse (12) der Führungsschiene (10) einen Winkel von weniger als 5° einschließt.

6. Motorsäge nach Anspruch 5,
**dadurch gekennzeichnet, dass** die erste Markierung (21) und die zweite Markierung (22) bei Blickrichtung in Querrichtung (y) mit der Längsmittelachse (12) der Führungsschiene (10) jeweils einen Winkel von weniger als 5° einschließen.

7. Motorsäge nach einem der Ansprüche 1 bis 6,
**dadurch gekennzeichnet, dass** die erste Markierung (21) und die zweite Markierung (22) bei Blickrichtung in Querrichtung (y) einen Winkel von weniger als 5° einschließen, insbesondere parallel zueinander verlaufen.

8. Motorsäge nach einem der Ansprüche 1 bis 7,
**dadurch gekennzeichnet, dass** die Führungsschiene (10) näher an der ersten Längsseite (13) verläuft als an der zweiten Längsseite (14).

9. Motorsäge nach einem der Ansprüche 1 bis 8,
**dadurch gekennzeichnet, dass** die Motorsäge (1) an der zweiten Längsseite (14) ein Gitter (16) mit Öffnungen (17) aufweist, wobei die Öffnungen (17) und zwischen den Öffnungen (17) liegende Gitterstege (29) des Gitters (16) einen Ansaugbereich (18) aufspannen.

10. Motorsäge nach Anspruch 9,
**dadurch gekennzeichnet, dass** mindestens eine der Markierungen (21, 22) zumindest teilweise in dem Ansaugbereich (18) verläuft.

11. Motorsäge nach Anspruch 9 oder 10,
**dadurch gekennzeichnet, dass** mindestens eine der Markierungen (21, 22) zumindest teilweise auf einem Gittersteg (29) des Gitters (16) verläuft.

12. Motorsäge nach einem der Ansprüche 9 bis 11,
**dadurch gekennzeichnet, dass** mindestens eine Markierung (21, 22) zumindest teilweise außerhalb des Ansaugbereichs (18) verläuft.

13. Motorsäge nach einem der Ansprüche 9 bis 12,
**dadurch gekennzeichnet, dass** mindestens eine Markierung (21, 22) den Ansaugbereich (18) begrenzt.

14. Motorsäge nach einem der Ansprüche 1 bis 13,
**dadurch gekennzeichnet, dass** mindestens eine Markierung (21, 22) durch eine farblich hervorgehobene Linie gebildet ist.

15. Motorsäge nach einem der Ansprüche 1 bis 14,
**dadurch gekennzeichnet, dass** mindestens eine Markierung (21, 22) durch eine hervorstehende Rippe (30) gebildet ist.

16. Motorsäge nach Anspruch 15,
**dadurch gekennzeichnet, dass** die Stirnseite (31) der Rippe (30) farblich hervorgehoben ist.

17. Motorsäge nach Anspruch 15 oder 16,
**dadurch gekennzeichnet, dass** mindestens eine Längsseite (32) der Rippe (30) farblich hervorgehoben ist.

18. Motorsäge nach einem der Ansprüche 1 bis 17,
**dadurch gekennzeichnet, dass** mindestens eine Markierung (21, 22) an einem am Gehäuse (2) fixierten Markierungsteil (33) ausgebildet ist.

19. Motorsäge nach einem der Ansprüche 1 bis 18,
**dadurch gekennzeichnet, dass** die Motorsäge (1) an der zweiten Längsseite (14) eine weitere Markierung (23) trägt, die zur Hochrichtung (z) der Motorsäge (1) um einen Winkel von weniger als 10° geneigt ist.

20. Motorsäge nach einem der Ansprüche 1 bis 19,
**dadurch gekennzeichnet, dass** die Motorsäge (1) an der zweiten Längsseite (14) eine weitere Markierung (24) trägt, wobei eine gedachte weitere Gerade (27), die entlang der weiteren Markierung (24) verläuft, bei Blickrichtung in Querrichtung (y) an keiner Stelle der Führungsschiene (10) einen Abstand von mehr als 10 mm zur Längsmittelachse (12) der Führungsschiene (10) aufweist.

21. Verfahren zur Herstellung eines Einschnitts in einem Werkstück mit einer Motorsäge nach einem der Ansprüche 1 bis 20, wobei die Sägekette (11) in das Werkstück (51) bewegt wird, bis mindestens eine gedachte Gerade (25, 26) eine gewünschte Lage eines Bodens (53) eines Einschnitts (52) erreicht.
